# EUROPEAN PATENT APPLICATION

(11) **EP 4 850 965 A1**
(43) Date of publication of application: **09.12.2026**
(21) Application number: 26176818.8
(22) Date of filing: 06.05.2026
(51) Int. Cl.: B60L 15/20, B60W 30/18

(54) **CONTROL APPARATUS FOR VEHICLE**

(30) Priority: 05.06.2025 JP 2025094011
(71) Applicant: MAZDA MOTOR CORPORATION, Hiroshima 730-8670 (JP)
(72) Inventor: Tsukamoto, Naoki, Aki-gun, Hiroshima, 730-8670 (JP); Tanaka, Kenji, Aki-gun, Hiroshima, 730-8670 (JP)
(74) Representative: Lorenz Seidler Gossel Part. mbB

(57) **Abstract**

[Problem] To simultaneously reduce electric power consumption and prevent worsening of drivability by appropriately controlling output and limitation of creep torque even when a vehicle is repeatedly accelerated and decelerated by an operation of a brake pedal.

[Solution] A control apparatus for a vehicle (1) includes an accelerator pedal sensor (16), a brake pedal sensor (18), a vehicle speed sensor (20), and an ECU (14) configured to be able to control output torque of a motor (2) to generate the creep torque when an accelerator pedal is not operated. The ECU: sets the creep torque to 0 in the case where a vehicle speed is higher than 0 and lower than a predetermined vehicle speed and a required brake pressure is higher than a predetermined value; causes the motor to output the creep torque in the case where the vehicle speed is higher than 0 and lower than the predetermined vehicle speed and the required brake pressure is equal to or lower than the predetermined value; and maintains output of the creep torque until a predetermined condition is satisfied in the case where the vehicle speed is higher than 0 and lower than the predetermined vehicle speed, and the motor is made to output the creep torque, but the required brake pressure becomes higher than the predetermined value.

## Description

### [Technical Field]

The present invention relates to a control apparatus for a vehicle and, in particular, to a control apparatus for a vehicle that controls creep torque generated by a motor in a vehicle that has a motor as a power source.

### [Background Art]

In a vehicle on which an internal combustion engine and one of an automatic transmission and a semi-automatic transmission are mounted, so-called creep torque is generated with which the vehicle travels forward or rearward without depression of an accelerator pedal in an idling state.

Also, in an electric vehicle or a hybrid vehicle that uses a motor as a power source, control for generating the creep torque by the motor is executed to achieve a similar operation feeling to that of the vehicle on which the internal combustion engine is mounted. However, in order to reduce electric power consumption and increase a travel distance, it is desirable to minimize generation of the wasteful creep torque.

For this reason, the following vehicle control apparatus (see Patent Literature 1), vehicle control (see Patent Literature 2), and the like are proposed. In a predetermined period in which an accelerator is OFF and a brake is ON, and which is started after the vehicle is brought into a predetermined stop state, the vehicle control apparatus maintains the generation of the creep torque and thereafter cuts the creep torque. In the vehicle control, a travel state where the accelerator is OFF and a vehicle speed is lower than a threshold is set as a creep torque output allowable region, the creep torque is limited on the basis of a brake-on operation when the travel state is shifted from being outside the creep torque output allowable region to being in the creep torque output allowable region while the brake-on operation is detected, and the creep torque is not limited when the brake-on operation is detected while the travel state is in the creep torque output allowable region.

### [Citation List]

### [Patent Literature]

[Patent Literature 1] JP2023-063099A
[Patent Literature 2] Japanese Patent No. 4,492,527 [Summary of Invention]

### [Technical Problem]

For example, it is considered that, when the vehicle is decelerated while following a preceding vehicle, a driver operates a brake pedal according to an inter-vehicular distance, decelerates the vehicle to be close to the stop state, thereafter releases the brake pedal to accelerate the vehicle by the creep torque, and then operates the brake pedal to decelerate the vehicle again. In such a case, when control is executed to generate the creep torque during acceleration of the vehicle and limit the creep torque during the following re-deceleration, the deceleration, a magnitude of which is greater than that expected by the driver, is possibly generated and causes a sense of discomfort by a combination of a braking force generated by braking and a torque reduction by limiting the creep torque. However, such a situation is not taken into consideration in the related art as in Patent Literatures 1, 2 described above.

The invention has been made to solve the problem of the related art described above, and therefore has an object of providing a control apparatus for a vehicle capable of simultaneously reducing electric power consumption and preventing worsening of drivability by appropriately controlling output and limitation of creep torque in a manner to follow a driver's intention according to an operation of a brake pedal or a travel state of the vehicle even when the vehicle is repeatedly accelerated and decelerated by depressing and releasing the brake pedal.

### [Solution to Problem]

In order to achieve the above object, the invention is a control apparatus for a vehicle on which a motor is mounted as a power source, and includes: an accelerator pedal sensor that detects an operation amount of an accelerator pedal; a brake pedal sensor that detects a stroke of a brake pedal; a vehicle speed sensor that detects a vehicle speed of the vehicle; and a controller that is configured to be able to control output torque of the motor such that creep torque is generated when the accelerator pedal is not operated. The controller is configured to: set the creep torque to 0 in the case where the vehicle speed is higher than 0 and lower than a predetermined vehicle speed and a required brake pressure calculated on the basis of the stroke of the brake pedal is higher than a predetermined value; cause the motor to output the creep torque in the case where the vehicle speed is higher than 0 and lower than the predetermined vehicle speed and the required brake pressure is equal to or lower than the predetermined value; maintain output of the creep torque until a predetermined condition is satisfied in the case where the vehicle speed is higher than 0 and lower than the predetermined vehicle speed, and the motor is made to output the creep torque, but the required brake pressure becomes higher than the predetermined value; and terminate maintenance of the output of the creep torque in the case where the predetermined condition is satisfied.

In the thus-configured invention, in the case where the vehicle speed is higher than 0 and lower than the predetermined vehicle speed, and the required brake pressure is higher than the predetermined value, the controller sets the creep torque to 0. Accordingly, when a driver depresses the brake pedal to decelerate the vehicle, it is possible to reduce electric power consumption by limiting the creep torque. Furthermore, in the case where the vehicle speed is higher than 0 and lower than the predetermined vehicle speed, and the required brake pressure is equal to or lower than the predetermined value, the motor is made to output the creep torque. In the case where the vehicle speed is higher than 0 and lower than the predetermined vehicle speed, and the motor is made to output the creep torque, but the required brake pressure becomes higher than the predetermined value, the output of the creep torque is maintained until the predetermined condition is satisfied. Accordingly, the creep torque is generated when the driver releases the brake pedal to accelerate the vehicle temporarily, and thereafter, the output of the creep torque is maintained when the driver depresses the brake pedal again to decelerate the vehicle again. In this way, it is possible to prevent a sense of discomfort that is caused by the limitation of the creep torque and a rapid increase in deceleration at the time when the driver depresses the brake pedal, which has been released once, again. Thus, even in the case where the acceleration and the deceleration of the vehicle is repeated by depressing and releasing the brake pedal, it is possible to appropriately control the output and the limitation of the creep torque in a manner to follow the driver's intention according to an operation of the brake pedal or a travel state of the vehicle. Therefore, it is possible to simultaneously reduce the electric power consumption and prevent worsening of drivability.

In the invention, preferably, the controller terminates the maintenance of the output of the creep torque when determining that the vehicle is stopped on the basis of the vehicle speed.

In the thus-configured invention, when the vehicle is stopped, the maintenance of the output of the creep torque is reset. Accordingly, it is possible to limit the creep torque again according to the operation of the brake pedal or the travel state of the vehicle thereafter, and it is thus possible to reduce the electric power consumption.

In the invention, preferably, the controller: acquires a reference value of the creep torque to be generated; calculates creep torque T by T = Ts × (1 - Gc) with creep cut gain of 0 or greater and 1 or less being set as Gc, the reference value being set as Ts, and the creep torque to be output by the motor being set as T; sets the creep cut gain Gc to 1 in the case where the vehicle speed is higher than 0 and lower than the predetermined value and the required brake pressure calculated on the basis of the stroke of the brake pedal is higher than the predetermined value; sets the creep cut gain Gc to less than 1 in the case where the vehicle speed is higher than 0 and lower than the predetermined value and the required brake pressure is equal to or lower than the predetermined value; and maintains the creep cut gain Gc to be constant until the predetermined condition is satisfied in the case where the vehicle speed is higher than 0 and lower than the predetermined value, and the creep cut gain Gc is less than 1, but the required brake pressure becomes higher than the predetermined value.

In the thus-configured invention, the creep cut gain Gc is set according to the operation of the brake pedal or the travel state of the vehicle. Thus, it is possible to appropriately control the output and the limitation of the creep torque.

Preferably the control apparatus is configured to set the creep cut gain Gc according to the operation of the brake pedal or the travel state of the vehicle.

The control apparatus may be configured - when a driver depresses the brake pedal to decelerate the vehicle - to reduce electric power consumption by limiting the creep torque.

Further, the control apparatus may be configured to set the creep cut gain according to the operation of the brake pedal or the travel state of the vehicle.

In accordance with a further embodiment the controller comprises a processor and a memory.

Preferably, the creep torque proceesing is started by the controller when the vehicle is powered on and is repeatedly executed.

In accordance with a further embodiment the controller is configured to output a command value to an inverter according to an operation of the accelerator pedal or the brake pedal by the driver or the vehicle speed. Preferably, the inverter is electrically connected to the controller and can input/output a control signal to/from the controller.

The controller may be configured to cause a battery of the vehicle to supply electric power to the motor or cause the motor to supply the regenerative power to the battery via said inverter, and to thereby control desired output torque or regenerative torque corresponding to the driver's operation and creep torque at the time when the accelerator pedal is released.

Furthermore, the controller may be configured to refer to a creep torque map that defines the relationship between the vehicle speed and the creep torque, and to acquire a reference value of the creep torque that corresponds to the vehicle speed. Said creep torque map may be stored in a memory, preferably in said memory of the controller.

The present invention further relates to a vehicle, wherein the vehicle comprises a control apparatus according to the present invention. The vehicle may be an electric vehicle (EV) or a hybrid vehicle (HEV).

### [Advantageous Effects of Invention]

According to the control apparatus for the vehicle in the invention, even in the case where the acceleration and the deceleration of the vehicle is repeated by depressing and releasing the brake pedal, it is possible to appropriately control the output and the limitation of the creep torque in the manner to follow the driver's intention according to the operation of the brake pedal or the travel state of the vehicle. Therefore, it is possible to simultaneously reduce the electric power consumption and prevent worsening of the drivability.

### [Brief Description of Drawings]

[FIG. 1] FIG. 1 is a plan view illustrating a schematic configuration of a vehicle to which a control apparatus for a vehicle according to an embodiment of the invention is applied.
[FIG. 2] FIG. 2 is a block diagram illustrating a functional configuration of the control apparatus for the vehicle according to the embodiment of the invention.
[FIG. 3] FIG. 3 is a flowchart illustrating creep torque control processing according to the embodiment of the invention.
[FIG. 4] FIG. 4 is a view illustrating an example of a creep torque map that defines a relationship between a vehicle speed and creep torque according to the embodiment of the invention.
[FIG. 5] FIG. 5 is a time chart at the time when the creep torque control processing is executed by the control apparatus for the vehicle according to the embodiment of the invention.

### [Description of Embodiments]

A description will hereinafter be made on a control apparatus for a vehicle according to an embodiment of the invention with reference to the accompanying drawings.

### <System Configuration>

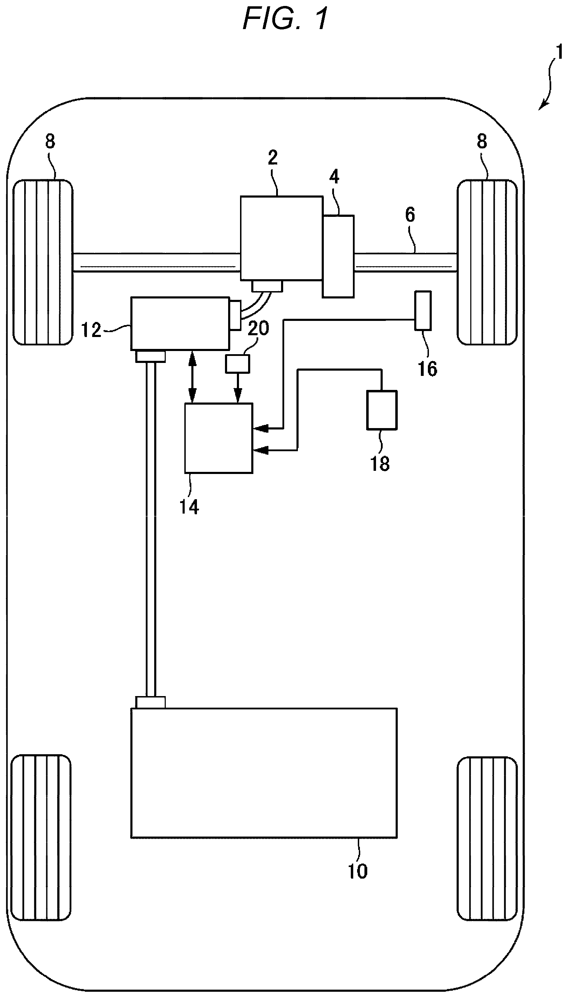

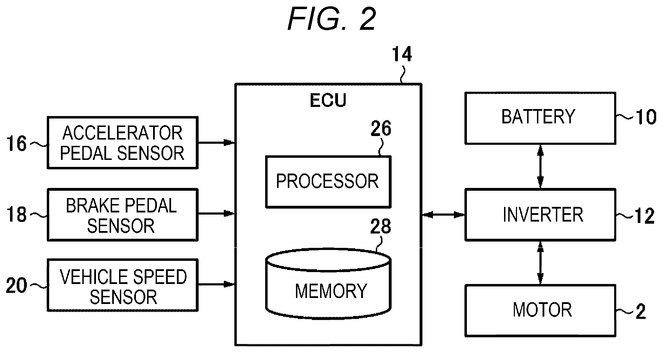

First, a description will be made on a configuration of a control apparatus for a vehicle according to the present embodiment with reference to FIGs. 1 and 2. FIG. 1 is a plan view illustrating a schematic configuration of a vehicle to which the control apparatus for the vehicle according to the present embodiment is applied, and FIG. 2 is a block diagram illustrating a functional configuration of the control apparatus for the vehicle according to the present embodiment.

As illustrated in FIG. 1, a vehicle 1 is an electric vehicle (EV) or a hybrid vehicle (HEV) on which a motor 2 is mounted as a power source. The motor 2 is mounted on a body front portion of the vehicle 1, for example. Torque that is output from the motor 2 is transmitted to a speed reducer 4. The speed reducer 4 outputs the output torque of the motor 2 to a pair of driveshafts 6 at a single reduction ratio. In this way, a pair of drive wheels 8 (right and left front wheels in an example illustrated in FIG. 1), each of which is attached to an outer end portion of the respective driveshaft 6 in a vehicle width direction, is driven.

A battery 10 that supplies electric power to the motor 2 is mounted on a body lower portion of the vehicle 1, for example. Furthermore, an inverter 12 is arranged near the motor 2. The inverter 12 converts DC power supplied from the battery 10 into AC power to supply it to the motor 2, and converts regenerative power generated by the motor 2 into the DC power to supply it to the battery 10 and thereby charge the battery 10. The inverter 12 is electrically connected to an Electronic Control Unit (ECU) 14 and can input/output a control signal to/from the ECU 14.

The vehicle 1 further includes: an accelerator pedal sensor 16 that detects an operation amount of an accelerator pedal (corresponding to an amount of the accelerator pedal depressed by a driver); a brake pedal sensor 18 that detects a stroke of a brake pedal (corresponding to an amount of the brake pedal depressed by the driver); and a vehicle speed sensor 20 that detects a vehicle speed. Each of these sensors is electrically connected to the ECU 14 either directly or indirectly, and outputs a detection signal, which corresponds to the respective detection value, to the ECU 14.

In this vehicle 1, the ECU 14 executes various types of control. In the present embodiment, the ECU 14 functions as a controller in the control apparatus for the vehicle. That is, the ECU 14 is configured to output a command value to the inverter 12 according to an operation of the accelerator pedal or the brake pedal by the driver or the vehicle speed, to cause the battery 10 to supply the electric power to the motor 2 or cause the motor 2 to supply the regenerative power to the battery 10 via this inverter 12, and to thereby control desired output torque or regenerative torque corresponding to the driver's operation and creep torque at the time when the accelerator pedal is released.

As illustrated in FIG. 2, the ECU 14 includes: a processor 26; and memory 28 (ROM, RAM, or the like) for storing various programs (including a basic control program such as an OS and an application program that is activated on the OS to implement a particular function), each of which is interpretively executed on the processor 26, and various pieces of data.

### <Control Processing>

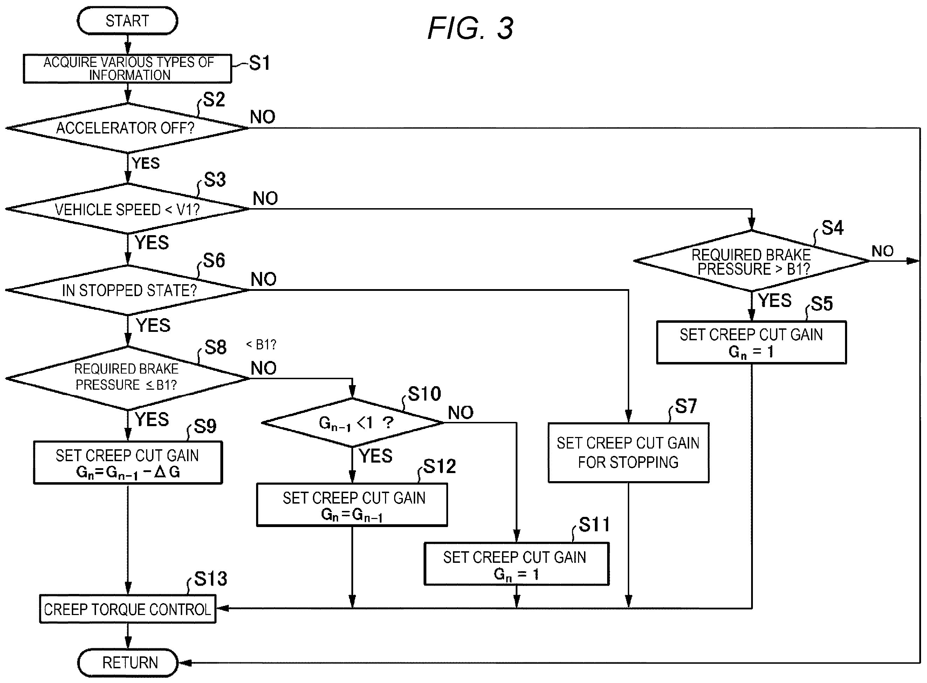

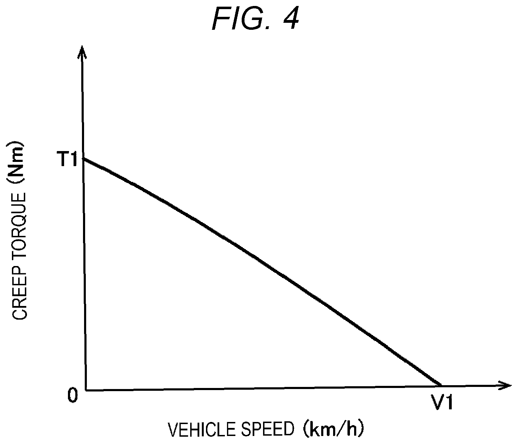

Next, a description will be made on creep torque control processing according to the present embodiment with reference to FIGs. 3 and 4. FIG. 3 is a flowchart illustrating the creep torque control processing according to the present embodiment, and FIG. 4 is a view illustrating an example of a creep torque map that defines a relationship between the vehicle speed and the creep torque.

The creep torque control processing illustrated in FIG. 3 is started by the ECU 14 when the vehicle 1 is powered on, and is repeatedly executed in a predetermined cycle.

First, in step S1, the ECU 14 acquires the accelerator pedal operation amount detected by the accelerator pedal sensor 16, the stroke of the brake pedal detected by the brake pedal sensor 18, and the vehicle speed detected by the vehicle speed sensor 20.

Next, in step S2, the ECU 14 determines whether the accelerator is OFF (the accelerator pedal is not operated) on the basis of the accelerator pedal operation amount that is acquired in step S1. In the present embodiment, it is determined that the accelerator is OFF when the accelerator pedal operation amount is 0.

If the accelerator is not OFF as a result of the determination in step S2 (step S2: NO), it is not in a situation where the creep torque is controlled but in a situation where the output torque of the motor 2 is controlled according to the accelerator pedal operation amount. Thus, the ECU 14 terminates the creep torque control processing.

On the other hand, if the accelerator is OFF as the result of the determination in step S2 (step S2: YES), the processing proceeds to step S3, and the ECU 14 determines whether the vehicle speed acquired in step S1 is lower than a predetermined vehicle speed V1. V1 is an upper limit value of the vehicle speed at which the creep torque is generated, and is 5 km/h, for example.

If the vehicle speed is not lower than V1 (is equal to or higher than V1) as a result of the determination in step S3 (step S3: NO), the processing proceeds to step S4, and the ECU 14 determines whether a required brake pressure is higher than a predetermined pressure B1 on the basis of the stroke of the brake pedal acquired in step S1. The required brake pressure can be calculated on the basis of the stroke of the brake pedal. In the present embodiment, B1 is a pressure corresponding to a minimum brake pressure, which is generated when the driver intentionally depresses the brake pedal, and is 5% of a maximum value of the required brake pressure, for example.

As a result, if the required brake pressure is equal to or lower than the predetermined pressure B1 (step S4: NO), it is not the situation to generate the creep torque due to the vehicle speed of V1 or higher, and there is no need to limit the creep torque due to a lack of the intentional depression of the brake pedal by the driver. Thus, the ECU 14 terminates the creep torque control processing.

On the other hand, if the required brake pressure is higher than the predetermined pressure B1 (step S4: YES), the processing proceeds to step S5, and the ECU 14 sets creep cut gain Gₙ in a current processing cycle to 1. Here, the creep cut gain in the present embodiment is a numerical value that indicates a degree to limit the creep torque to be output by the motor 2. The creep torque is not limited at all when the creep cut gain is 0, and the creep torque is limited by 100% when the creep cut gain is 1 (that is, the creep torque becomes 0). In the present embodiment, an initial value of the creep cut gain is set to 0.

On the other hand, if the vehicle speed is lower than V1 as the result of the determination in step S3 (step S3: NO), the processing proceeds to step S6, and the ECU 14 determines whether the vehicle 1 is in a stopped state on the basis of the vehicle speed acquired in step S1. In the present embodiment, in the case where a state where the vehicle speed is equal to or lower than 1 km/h does not continue for a predetermined time (for example, 1 second), it is determined that the vehicle 1 is not in the stopped state.

As a result, if the vehicle is stopped (step S6: NO), the processing proceeds to step S7, and the ECU 14 sets the creep cut gain to a stop value. The creep cut gain for stopping is 1, for example.

On the other hand, if the vehicle 1 is not in the stopped state as the result of the determination in step S6 (step S6: YES), the processing proceeds to step S8, and the ECU 14 determines whether the required brake pressure is equal to or lower than the predetermined pressure B1 on the basis of the stroke of the brake pedal acquired in step S1.

As a result, if the required brake pressure is equal to or lower than the predetermined pressure B1 (step S8: YES), that is, if the driver has released the brake pedal, the processing proceeds to step S9, and the ECU 14 sets the creep cut gain. At this time, the ECU 14 sets the creep cut gain such that the creep cut gain is reduced at a predetermined change rate. For example, the creep cut gain in the current processing cycle is calculated as Gₙ = Gₙ₋₁ - ΔG with the creep cut gain in the current processing cycle being set as Gₙ, the creep cut gain in the previous processing cycle being set as Gₙ₋₁, and a reduction range of the creep cut gain (corresponding to the change rate of the creep cut gain) per processing cycle being set as ΔG.

On the other hand, if the required brake pressure is not equal to or lower than the predetermined pressure B1 (the required brake pressure is higher than the predetermined pressure B1) as the result of the determination in step S8 (step S8: NO), the processing proceeds to step S10, and the ECU 14 determines whether the creep cut gain Gₙ₋₁ in the previous processing cycle is less than 1.

As a result, if the creep cut gain Gₙ₋₁ in the previous processing cycle is not less than 1 (step S10: NO), that is, if the creep cut gain Gₙ₋₁ in the previous processing cycle is 1, the processing proceeds to step S11, and the ECU 14 sets the creep cut gain Gₙ in the current processing cycle to 1.

On the other hand, if the creep cut gain Gₙ₋₁ in the previous processing cycle is less than 1 (step S10: YES), the processing proceeds to step S12, and the ECU 14 sets the creep cut gain in a manner to maintain the creep cut gain. For example, the creep cut gain in the current processing cycle is calculated as Gₙ = Gₙ₋₁ with the creep cut gain in the current processing cycle being set as Gₙ and the creep cut gain in the previous processing cycle being set as Gₙ₋₁.

After step S5, S7, S9, S11, or S12, in step S13, the ECU 14 controls the creep torque on the basis of the vehicle speed acquired in step S1 and the creep cut gain set in step S5, S7, S9, S11, or S12.

In the present embodiment, the ECU 14 refers to the creep torque map (one example is illustrated in FIG. 4) that defines the relationship between the vehicle speed and the creep torque, and acquires a reference value of the creep torque that corresponds to the vehicle speed acquired in step S1. The creep torque map is stored in advance in the memory 28. As illustrated in FIG. 4, the reference value of the creep torque is defined to become a maximum value T1 at the time when the vehicle speed is 0 km/h and to become 0 at the time when the vehicle speed is the predetermined vehicle speed V1.

The ECU 14 calculates creep torque T to be output by the motor 2 as T = Ts × (1 - Gₙ) with the reference value of the creep torque acquired from the creep torque map being set as Ts and the creep cut gain set in step S5, S7, S9, S11, or S12 being set as Gₙ. That is, in the case where the creep cut gain Gc is greater than 0, the creep torque T to be output by the motor 2 is lower than the reference value Ts. Then, the ECU 14 outputs a command value to the inverter 12 so as to cause the motor 2 to output the calculated creep torque T. After step S13, the ECU 14 terminates the creep torque control processing.

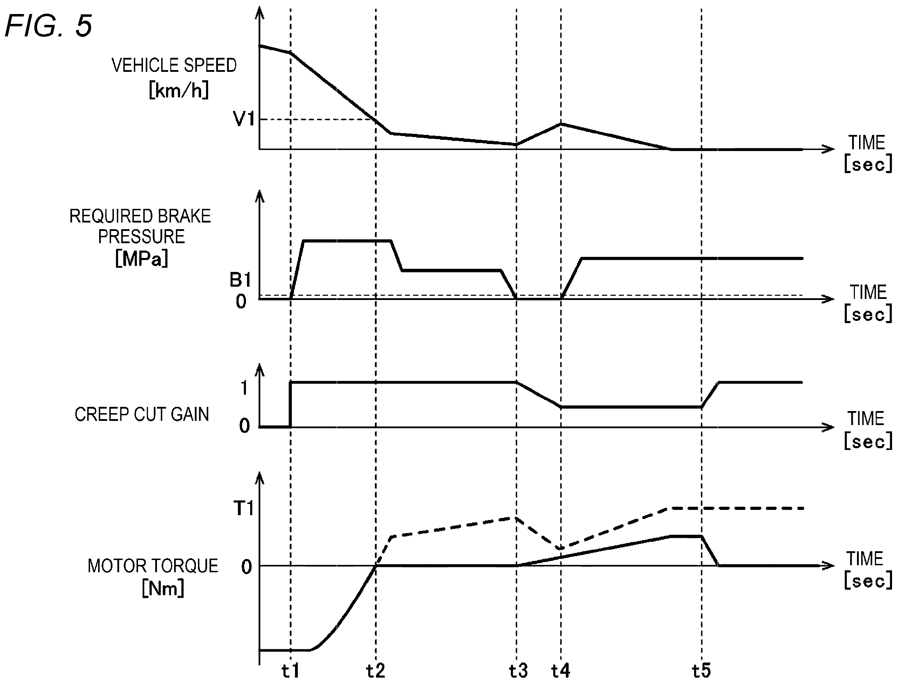

FIG. 5 is a time chart that exemplifies temporal changes in the vehicle speed, the required brake pressure, and the creep torque to be output when the creep torque control processing is executed by the control apparatus for the vehicle according to the present embodiment. It is assumed that FIG. 5 illustrates a state where the accelerator pedal operation amount is 0 (accelerator OFF). In FIG. 5, a horizontal axis represents time, and a vertical axis represents the vehicle speed, the required brake pressure, the creep cut gain, and motor torque in this order from the top. A negative value of the motor torque represents the regenerative torque, and a positive value thereof represents the creep torque. Furthermore, a dotted line of the motor torque represents an example of a change in the creep torque by control that does not limit the creep torque (a comparative example), and a solid line thereof represents an example of the change in the creep torque that is controlled by the control apparatus for the vehicle in the present embodiment.

In the example illustrated in FIG. 5, when the driver starts depressing the brake pedal in a state where the vehicle speed is higher than V1 (that is, a state where the vehicle speed exceeds the upper limit value at which the creep torque is generated), the required brake pressure is increased, and becomes higher than B1 at time t1. Thus, the creep cut gain becomes 1. The motor 2 generates the regenerative torque.

When the driver keeps depressing the brake pedal, and the vehicle speed is thereby reduced to be lower than V1 at time t2, the reference value Ts of the creep torque becomes higher than 0 in response to the reduction in the vehicle speed according to the creep torque map illustrated in FIG. 4 (the dotted line in FIG. 5). However, the required brake pressure becomes higher than B1 and the creep cut gain becomes 1 at the time t1. Thus, even in the case where the reference value Ts of the creep torque is increased in response to the reduction in the vehicle speed, the generation of the creep torque by the motor 2 is limited, and it remains 0 (the solid line in FIG. 5).

After the vehicle speed is further reduced, due to an increase in an inter-vehicular distance from the preceding vehicle, or the like, the driver releases the brake pedal to stop the deceleration and accelerate the vehicle by the creep torque. Consequently, the required brake pressure is reduced and becomes equal to or lower than B1 at time t3. As a result, the creep cut gain starts being reduced from 1 at the predetermined change rate. In conjunction therewith, the creep torque starts being increased from 0.

Thereafter, when the driver depresses the brake pedal again to decelerate the vehicle due to a reduction in the inter-vehicular distance from the preceding vehicle, or the like, the required brake pressure is increased again and becomes higher than B1 at time t4. At this time, the creep cut gain is reduced to be less than 1. Thus, the creep cut gain does not become 1 despite a fact that the required brake pressure is higher than B1, and the creep cut gain at a time point of the time t4 is maintained. That is, the output of the creep torque is maintained. As a result, at the time t4 onward, the creep torque to be output is increased in conjunction with the increase in the reference value of the creep torque that corresponds to the reduction in the vehicle speed. Thus, it is possible to prevent a sense of discomfort that is caused by the limitation of the creep torque and a rapid increase in the deceleration at the time when the driver depresses the brake pedal, which has been released once, again.

It is set that the creep cut gain is increased to 1 at the predetermined change rate in the case where a predetermined time elapses since the vehicle speed is reduced to 0 km/h by the continuous depression of the brake pedal by the driver, and where it is determined that the vehicle is in the stop state at time t5. That is, the maintenance of the output of the creep torque is terminated. As a result, the generation of the creep torque by the motor 2 is limited to become 0.

In FIG. 5, when the solid line (the present embodiment) and the dotted line (the comparative example), each of which represents the temporal change in the creep torque, are compared, in the present embodiment, the generation time and a magnitude of the creep torque are small, and thus, compared to the comparative example, the electric power consumption by generating the creep torque is reduced.

### <Operational Effects>

Next, a description will be made on operational effects of the control apparatus for the vehicle according to the above-described embodiment.

First, in the case where the vehicle speed is higher than 0 and lower than the predetermined vehicle speed V1, and the required brake pressure is higher than the predetermined pressure B1, the ECU 14 sets the creep torque to 0. Accordingly, when the driver depresses the brake pedal to decelerate the vehicle 1, it is possible to reduce the electric power consumption by limiting the creep torque. Furthermore, in the case where the vehicle speed is higher than 0 and lower than the predetermined vehicle speed V1, and the required brake pressure is equal to or lower than the predetermined pressure B1, the motor 2 is made to output the creep torque. In the case where the vehicle speed is higher than 0 and lower than the predetermined vehicle speed V1, and the motor 2 is made to output the creep torque, but the required brake pressure becomes higher than the predetermined pressure B1, the output of the creep torque is maintained until the predetermined condition is satisfied. Accordingly, the creep torque is generated when the driver releases the brake pedal to accelerate the vehicle 1 temporarily, and thereafter, the output of the creep torque is maintained when the driver depresses the brake pedal again to decelerate the vehicle 1 again. In this way, it is possible to prevent the sense of discomfort that is caused by the limitation of the creep torque and the rapid increase in the deceleration at the time when the driver depresses the brake pedal, which has been released once, again. Thus, even in the case where the acceleration and the deceleration of the vehicle 1 is repeated by depressing and releasing the brake pedal, it is possible to appropriately control the output and the limitation of the creep torque in a manner to follow the driver's intention according to the operation of the brake pedal or the travel state of the vehicle 1. Therefore, it is possible to simultaneously reduce the electric power consumption and prevent worsening of drivability.

In addition, when the vehicle 1 is stopped, the maintenance of the output of the creep torque is reset. Accordingly, it is possible to limit the creep torque again according to the operation of the brake pedal or the travel state of the vehicle thereafter, and it is thus possible to reduce the electric power consumption.

In the above-described embodiment, the creep cut gain Gc is set according to the operation of the brake pedal or the travel state of the vehicle 1. Thus, it is possible to appropriately control the output and the limitation of the creep torque.

### [Reference Signs List]

1: vehicle
2: motor
4: speed reducer
6: driveshaft
8: drive wheel
10: battery
12: inverter
14: ECU
16: accelerator pedal sensor
18: brake pedal sensor
20: vehicle speed sensor
26: processor
28: memory

## Claims

1. A control apparatus for a vehicle (1) on which a motor (2) is mounted as a power source, the control apparatus comprising:
an accelerator pedal sensor (16) that detects an operation amount of an accelerator pedal;
a brake pedal sensor that detects a stroke of a brake pedal;
a vehicle speed sensor (20) that detects a vehicle speed of the vehicle (1); and
a controller (14) that can control output torque of the motor (2) such that creep torque is generated when the accelerator pedal is not operated, wherein
the controller (14):
sets the creep torque to 0 in the case where the vehicle speed is higher than 0 and lower than a predetermined vehicle speed and a required brake pressure calculated on the basis of the stroke of the brake pedal is higher than a predetermined value;
causes the motor (2) to output the creep torque in the case where the vehicle speed is higher than 0 and lower than the predetermined vehicle speed and the required brake pressure is equal to or lower than the predetermined value;
maintains output of the creep torque until a predetermined condition is satisfied in the case where the vehicle speed is higher than 0 and lower than the predetermined vehicle speed, and the motor (2) is made to output the creep torque, but the required brake pressure becomes higher than the predetermined value; and
terminates maintenance of the output of the creep torque in the case where the predetermined condition is satisfied.

2. The control apparatus for the vehicle (1) according to claim 1, wherein
the controller (14) terminates the maintenance of the output of the creep torque when determining that the vehicle (1) is stopped on the basis of the vehicle speed.

3. The control apparatus for the vehicle according to claim 1 or 2, wherein
the controller (14):
acquires a reference value of the creep torque to be generated;
calculates creep torque T by T = Ts × (1 - Gc) with the creep cut gain of 0 or greater and 1 or less being set as Gc, the reference value being set as Ts, and the creep torque to be output by the motor (1) being set as T;
sets the creep cut gain Gc to 1 in the case where the vehicle speed is higher than 0 and lower than the predetermined vehicle speed and the required brake pressure calculated on the basis of the stroke of the brake pedal is higher than the predetermined value;
sets the creep cut gain Gc to less than 1 in the case where the vehicle speed is higher than 0 and lower than the predetermined vehicle speed and the required brake pressure is equal to or lower than the predetermined value; and
maintains the creep cut gain Gc to be constant until the predetermined condition is satisfied in the case where the vehicle speed is higher than 0 and lower than the predetermined vehicle speed, and the creep cut gain Gc is less than 1, but the required brake pressure becomes higher than the predetermined value.

4. The control apparatus for the vehicle (1) according to claim 3, wherein the control apparatus is configured to set the creep cut gain Gc according to the operation of the brake pedal or the travel state of the vehicle (1).

5. The control apparatus for the vehicle (1) according to any one of the preceding claims, wherein the control apparatus is configured - when a driver depresses the brake pedal to decelerate the vehicle - to reduce electric power consumption by limiting the creep torque.

6. The control apparatus for the vehicle (1) according to any one of the preceding claims, wherein the control apparatus is configured to set the creep cut gain according to the operation of the brake pedal or the travel state of the vehicle.

7. The control apparatus for the vehicle (1) according to any one of the preceding claims, wherein the controller (14) comprises a processor (26) and a memory (28).

8. The control apparatus for the vehicle (1) according to any one of the preceding claims, wherein the creep torque proceesing is started by the controller (14) when the vehicle (1) is powered on and is repeatedly executed.

9. The control apparatus for the vehicle (1) according to any one of the preceding claims, wherein the controller (14) is configured to output a command value to an inverter (12) according to an operation of the accelerator pedal or the brake pedal by the driver or the vehicle speed.

10. The control apparatus for the vehicle (1) according to claim 9, wherein the inverter (12) is electrically connected to the controller (14) and can input/output a control signal to/from the controller (14).

11. The control apparatus for the vehicle (1) according to claim 9 or 10 wherein the controller (14) is configured to cause a battery (10) of the vehicle to supply electric power to the motor (2) or cause the motor (2) to supply the regenerative power to the battery (10) via said inverter (12), and to thereby control desired output torque or regenerative torque corresponding to the driver's operation and creep torque at the time when the accelerator pedal is released.

12. The control apparatus for the vehicle (1) according to any one of the preceding claims, wherein the controller (14) is configured to refer to a creep torque map that defines the relationship between the vehicle speed and the creep torque, and to acquire a reference value of the creep torque that corresponds to the vehicle speed.

13. The control apparatus for the vehicle (1) according to claim 12, wherein said creep torque map is stored in a memory (28), preferably in said memory (28) of the controller (14).

14. A vehicle (1), wherein the vehicle (1) comprises a control apparatus according to any one of claims 1 to 13.

15. A vehicle (1) according to claim 14, wherein the vehicle is an electric vehicle (EV) or a hybrid vehicle (HEV).
